## Europäisches Patentamt

## European Patent Office

## Office européen des brevets

(11) Veröffentlichungsnummer: **0 211 275**
**B1**

(12) **EUROPÄISCHE PATENTSCHRIFT**

(45) Veröffentlichungstag der Patentschrift:
**02.11.89**

(21) Anmeldenummer: **86109545.3**

(22) Anmeldetag: **11.07.86**

(51) Int. Cl.⁴: **F16J 15/32, A46D 3/05,**
**A46D 9/00**

(54) Verfahren zur Herstellung einer Bürstendichtung und Vorrichtung zur Durchführung des Verfahrens.

(30) Priorität: **31.07.85 DE 3527499**
**27.02.86 DE 3606284**

(43) Veröffentlichungstag der Anmeldung:
**25.02.87 Patentblatt 87/9**

(45) Bekanntmachung des Hinweises auf die Patenterteilung:
**02.11.89 Patentblatt 89/44**

(84) Benannte Vertragsstaaten:
**DE FR GB IT**

(56) Entgegenhaltungen:
**DE-A- 2 830 839**
**GB-A- 2 033 026**
**US-A- 3 352 604**
**US-E- 30 206**

(73) Patentinhaber: **MTU MOTOREN- UND TURBINEN-UNION MÜNCHEN GMBH, Dachauer Strasse 665 Postfach 50 06 40, D-8000 München 50(DE)**

(72) Erfinder: **Berger, Horst, Ulmenstrasse 20,
D-8032 Lochham(DE)**
Erfinder: **Schunn, Thomas, Auenstrasse 7,
D-8080 Emmering(DE)**
Erfinder: **Werner, Klemens, Esmarckstrasse 7 a,
D-8000 München 50(DE)**
Erfinder: **Merz, Herbert, Donauwörther Strasse 21,
D-8000 München 50(DE)**

## Beschreibung

Die Erfindung bezieht sich auf ein Verfahren zur Herstellung einer Bürstendichtung, deren Borsten in einer vorzugsweise als Haltering ausgebildeten Fassung befestigt sind durch Wickeln eines aus Borstenmaterial bestehenden Fadens über einen Kern, Aufbringen einer die gewickelte Fadenpackung teilweise einschließenden Fassung und Durchtrennen der Fadenpackung, so daß freie Borstenenden entstehen.

Ein Verfahren der vorgenannten Art ist aus der DE-A 28 30 839 bekannt. Bei diesem vorbekannten Verfahren werden Elemente zur Fassung der Borsten teilweise in den Wickelkern einbezogen, teilweise außen auf die gewickelte Fadenpackung aufgesetzt. Es ergibt sich dadurch ein kompliziert konturierter Kern und eine vergleichsweise zeitaufwendige Arbeitstechnik. Ein weiterer Nachteil des vorbekannten Verfahrens besteht darin, daß ein großer Teil der gewickelten Fadenpackung nach dem Durchtrennen als Abfall anfällt. Da es sich bei den verwendeten Borstenmaterialien häufig um teuere Werkstoffe handelt, ergeben sich dadurch hohe Herstellkosten für die Bürstendichtungen.

Aus der US A 3 352 604 ist es bekannt, zur Erzeugung einer Bürstenleiste einen Faden über einen zwei parallele Längsholme umfassenden Kern zu wickeln. Auch bei dieser vorbekannten Anordnung werden Elemente des Kernes mit zur Fassung der Borsten herangezogen und ist der Kern relativ kompliziert zusammengesetzt.

Aufgabe der vorliegenden Erfindung ist es, ein Verfahren der eingangs genannten Gattung zu finden, welches mit verfahrenstechnisch einfachen Mitteln und unter sparsamem Materialeinsatz die Serienherstellung von Bürstendichtungen ermöglicht.

Erfindungsgemäß ist ein solches Verfahren durch folgende Verfahrensschritte gekennzeichnet:

a) Wickeln des aus Borstenmaterial bestehenden Fadens über zwei parallel mit Abstand voneinander angeordnete langgestreckte Dorne zu einer dichten, etwa ovalen Querschnitt aufweisenden Fadenpackung.

b) Fassen der Fadenpackung auf den beiden Dornen durch Aufstecken von Klemmleisten an den Scheiteln.

c) Durchtrennen der Fadenpackung in einem Schnitt parallel zu den Dornen, so daß zwei sich gegenüberliegende vorzugsweise mit gleichlangen Borsten ausgestattete gerade Bürstenhalbzeuge entstehen.

d) Biegen der geraden Bürstenhalbzeuge in die gewünschte Bürstenkontur, insbesondere Kreisbogenform und Fügen zu einem geschlossenen Ring.

Ein Hauptvorteil des erfindungsgemäßen Verfahrens besteht darin, daß das gewickelte Borstenmaterial praktisch ohne Verschnitt ausgenutzt wird. Ein weiterer Vorteil des erfindungsgemäßen Verfahrens ist darin zu sehen, daß Bürstendichtungen mit sehr unterschiedlicher geometrischer Kontur hergestellt werden können, indem die Bürstenhalbzeuge je nach der gewünschten Kontur gebogen werden. Für die Herstellung von Bürstendichtungen in Kreisringform können dabei jeweils zwei Bürstenhalbzeuge von der Länge des halben Umfangs der fertigen Bürstenringdichtung zu Halbkreisbogen geformt werden und durch Fügung an beiden Enden zu der fertigen Ringdichtung zusammengefügt werden. Es kann jedoch auch jeweils ein Bürstenhalbzeug von der Länge des ganzen Umfangs der herzustellenden Ringdichtung in Ringform gebogen und dann die beiden anstoßenden Enden dieses Bürstenhalbzeugs miteinander verbunden werden, was üblicherweise durch Schweißen oder Löten erfolgt. Ein weiterer Vorteil des erfindungsgemäßen Verfahrens ist darin zu sehen, daß aus den geraden Bürstenhalbzeugen sowohl Ringdichtungen gebogen werden können, deren Borsten in Radialrichtung nach außen stehen als auch solche, deren Borsten radial nach innen stehen.

Sowohl für die beiden vorgenannten Arten von Ringdichtungen als auch für anders konturierte Bürstendichtungen kann es vorteilhaft sein, wenn sich an den Verfahrensschritt d) des vorgenannten Verfahrens noch folgende Verfahrensschritte anschließen:

e) Aufbringen und Fügen einer zweiten Borstenfassung auf die freien Enden der Borsten und

f) Abtrennen der mit der Klemmleiste verbundenen Borstenenden.

Bei dieser Ausgestaltung des Verfahrens wird demnach die zur Klemmung der Fadenpackung auf den Dornen verwendete Klemmleiste nicht als Fassung der endgültigen Bürstendichtung verwendet, was dann vorteilhaft sein kann, wenn besonders eng tolerierte Abmessungen der Fassung der Bürstendichtung einzuhalten sind. Die zweiten Borstenfassungen können so ausgebildet sein, daß sie sowohl vor der Zusammenfügung mit den Borsten als auch danach einer entsprechend gewünschten Feinbearbeitung insbesondere durch Drehen oder Schleifen unterzogen werden können.

Zur Erzielung einer Schrägstellung der Borsten in ihrer Fassung wird erfindungsgemäß vorgeschlagen, daß der Faden in einer Wickelebene gewickelt wird, welche senkrecht zu der durch die Dorne aufgespannten Ebene und um einen Steigungswinkel $\wp$ geneigt zur Längsrichtung der Dorne liegt. Dadurch entstehen Bürstenhalbzeuge, deren Borsten nicht mehr senkrecht zu den Dornen bzw. der aufgesetzten Klemmleiste ausgerichtet sind sondern schräg, was bei einer Weiterverarbeitung zu einer Ringdichtung dazu führt, daß die Borsten nicht in Radialrichtung sondern unter einem gewünschten Winkel gegen die Radialrichtung geneigt sind. Solche Bürstendichtungen mit geneigten Borsten werden für die Abdichtung von mit hoher Drehzahl gegeneinander rotierenden Bauteilen benötigt.

Eine besonders vorteilhafte Ausgestaltung des erfindungsgemäßen Verfahrens besteht darin, daß zur Erzielung der Schrägstellung der Borsten in ihrer Fassung vor dem Verfahrensschritt b) die mit der Fadenpackung bewickelten Dorne in Längsrichtung gegeneinander versetzt werden. Eine Änderung der Wickelebene ist bei diesem Verfahren dann nicht erforderlich.

Zur Festlegung der Borsten in der Bürstenfassung, sei es, daß es sich bei der Bürstenfassung um die Klemmleiste selbst oder um eine zweite später aufgebrachte Borstenfassung handelt, kann es vorteilhaft sein, je nach Verwendung von Borstenmaterial lagenweise Kleber-bzw. Lötfolie im Bereich der Scheitel der Fadenpackung beizuwickeln. Schließlich kann bei dem erfindungsgemäßen Verfahren anstelle eines Einzelfadens auch ein Fadenstrang oder ein bandförmiges Unidirektionalgewebe mit leicht entfernbarer Schußbindung gewickelt werden. Der Wickelvorgang wird dadurch beschleunigt, bzw. wird in gleicher Zeit eine höhere Bürstenstärke erzielt.

Vorteilhaft wird nach dem Verfahrensschritt e) (Anspruch 2) eine Fertigbearbeitung der rückwärtigen Stirnfläche, insbesondere Umfangsfläche der Borstenfassung durchgeführt.

Im Fall der Verwendung von metallischem Bürstenmaterial kann es, insbesondere dann, wenn eine Schrägstellung der Borsten durch Längsversetzung der Dorne gegeneinander stattgefunden hat, vorteilhaft sein, vor dem Durchtrennen der dann aus Metalldraht bestehenden Fadenpackung diese einer Wärmebehandlung zu unterziehen. Hierdurch kann eine gewünschte hohe Gleichmäßigkeit der Ausrichtung der einzelnen Metallborsten erzielt werden als auch eine gewünschte Änderung der Materialeigenschaften, wie z. B. der Elastizität oder der Härte.

Soweit Klemmleisten zur Festlegung der Fadenpackung auf den beiden Dornen verwendet werden, ist es vorteilhaft, wenn diese im Profil U- oder Hutform aufweisen. Beide Profile sind in der Lage, eine hohe Spannkraft auf die Fadenpackung auszuüben. Die Verwendung eines Hutprofils ist vor allem dann vorteilhaft, wenn die Klemmleiste selbst als endgültige Fassung der Bürstendichtung vorgesehen ist. Die Hutränder können dann nämlich zwischen den Rollen einer Rollbiegevorrichtung gefaßt werden und so einfach und schnell in eine gewünschte Kreisbogenform gebracht werden.

Eine vorteilhafte Ausgestaltung der Erfindung besteht darin, daß die Klemmleiste eine im Profil kreisförmige Manschette ist.

In weiterer Ausbildung des erfindungsgemäßen Verfahrens kann zur Festlegung der Fadenpackung auf den beiden Dornen anstelle von Klemmleisten ein gieß- oder streichbares Aushärtmaterial vorzugsweise ein Harz, verwendet werden. Anstelle des Aufbringens der Klemmleisten nach Verfahrensschritt b) wird demgemäß das Aushärtmaterial aufgegossen bzw. aufgestrichen.

Soweit das Borstenmaterial aus Keramik oder Metall besteht, kann zur Festlegung auf den Dornen metallisches Aushärtematerial verwendet werden, z. B. ein geeignetes Lot.

Im weiteren bezieht sich die Erfindung auf eine Vorrichtung zur Durchführung des Verfahrens nach Patentanspruch 4 mit einem Wickelrahmen und ist dadurch gekennzeichnet, daß der Wickelrahmen als Parallelogrammgelenkrahmen (Gelenke 17) ausgebildet ist, über dessen parallel gegeneinander verschiebbare Basisholme der Faden wickelbar ist und dessen Querholme in ihrer Länge während der Parallelverschiebung der Basisholme veränderbar sind. Bei der Wicklung der Fadenpackung ist der Parallelogrammgelenkrahmen so verschoben, daß er ein Rechteck bildet, so daß nach Abschluß der Wicklung und vor Klemmung der Fadenpackung an den Scheiteln auf den Dornen eine Parallelverschiebung der Basisholme eine Schrägstellung der Borsten in ihrer Fassung bewirkt. Einem Verrutschen der Faserpackung muß dabei durch die Erzielung einer leichten Anspannung der Faserpackung entgegengewirkt werden. Dies kann durch Ausbildung der Querholme 12 als teleskopische Spannelemente geschehen.

Schließlich kann eine Vorrichtung zur Durchführung des Verfahrens nach Patentanspruch 4 auch dadurch gekennzeichnet sein, daß der Wickelrahmen zwei parallel ausgerichtete Basisholme umfaßt, an denen Kurvenscheiben mit ihren Sehnenkanten so befestigt sind, daß die Basisholme unter gegenseitigem Gleiten der Kurvenflächen der Kurvenscheiben aufeinander in Längsrichtung verschiebbar sind, wobei die Kurvenkontur so gewählt ist, daß die Länge einer Fadenwindung über dem Verschiebeweg konstant bleibt.

Anhand der beigefügten Zeichnungen werden das erfindungsgemäße Verfahren sowie die Vorrichtungen beispielhaft erläutert.

In den Zeichnungen zeigt:

Fig. 1 die Wicklung eines Fadens auf einen Wickelkern in Seitenansicht,

Fig. 2 einen Querschnitt durch die Anordnung nach Fig. 1, jedoch mit Klemmleisten,

Fig. 3 ein nach Durchtrennung der Fadenpackung entstandenes Bürstenhalbzeug im Schrägbild,

Fig. 4 das Aufbringen und Fügen einer zweiten Borstenfassung bei einem gebogenen Bürstenhalbzeug,

Fig. 5 eine Vorrichtung zur Durchführung des erfindungsgemäßen Verfahrens mit einem als Parallelogrammgelenkrahmen ausgebildeten Wickelrahmen schematisch,

Fig. 6 die Vorrichtung nach Fig. 5 nach Parallelverschiebung,

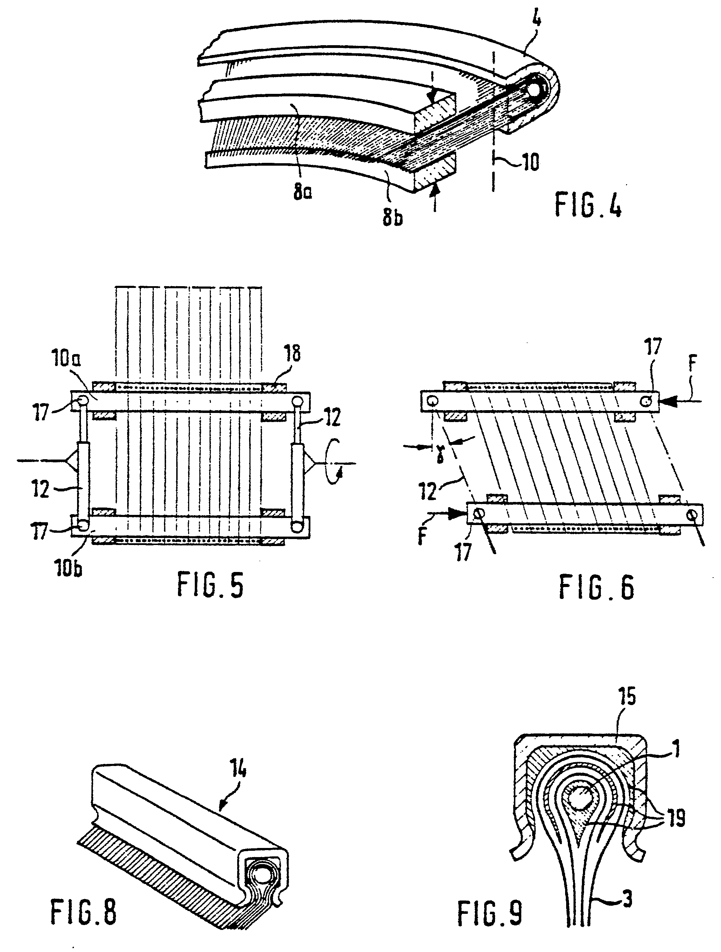

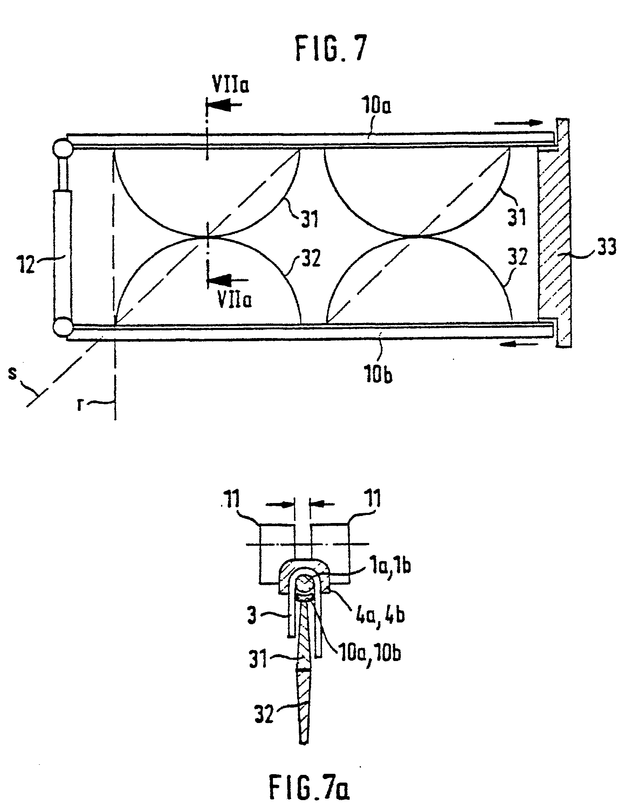

7. eine Vorrichtung ähnlich der in Fig. 5, jedoch mit Kurvenscheiben schematisch,

7a einen Schnitt entsprechend VIIa/VIIa nach Fig. 7 mit zusätzlich eingezeichneten Klemmbacken,

8 ein Bürstenhalbzeug mit schrägstehenden Borsten im Schrägbild,

9 die Festlegung einer Fadenpackung auf einem Dorn durch gieß- oder streichbares Aushärtoder Lotmaterial, bzw. durch Beiwickeln von Klebe- oder Lötfolienmaterial,

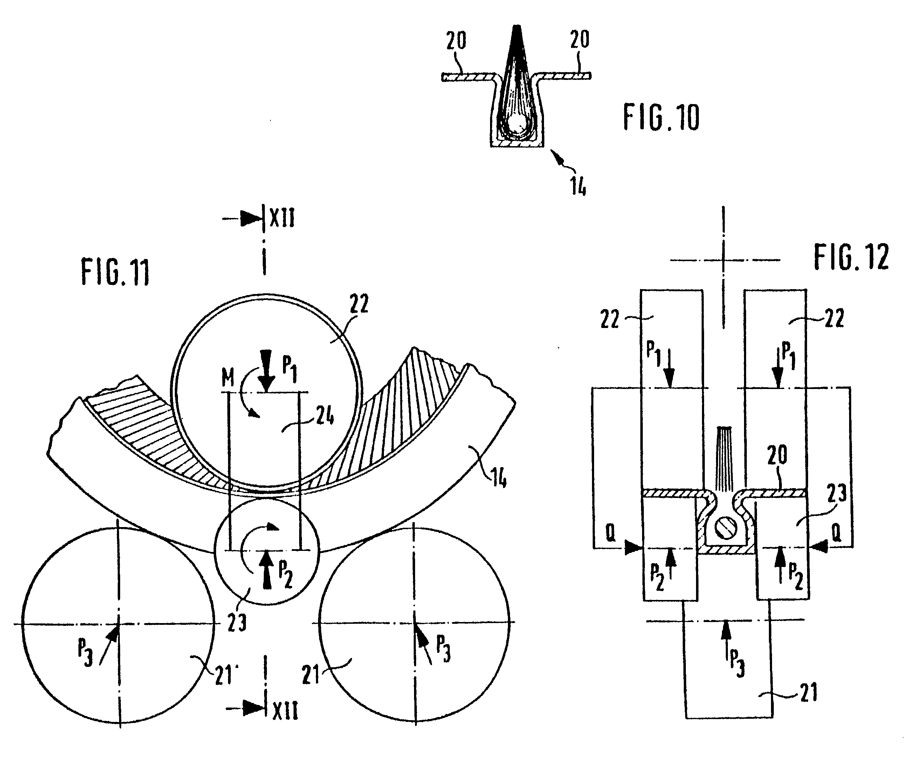

Fig. 10 ein Bürstenhalbzeug mit einer Hutprofilförmigen Klemmleiste,

Fig. 11 eine Beigerollvorrichtung für Bürstenhalbzeuge entsprechend Fig. 10 in Ansicht schematisch,

Fig. 12 einen Querschnitt entsprechend der Schnittlinie XII/XII aus Fig. 11 schematisch.

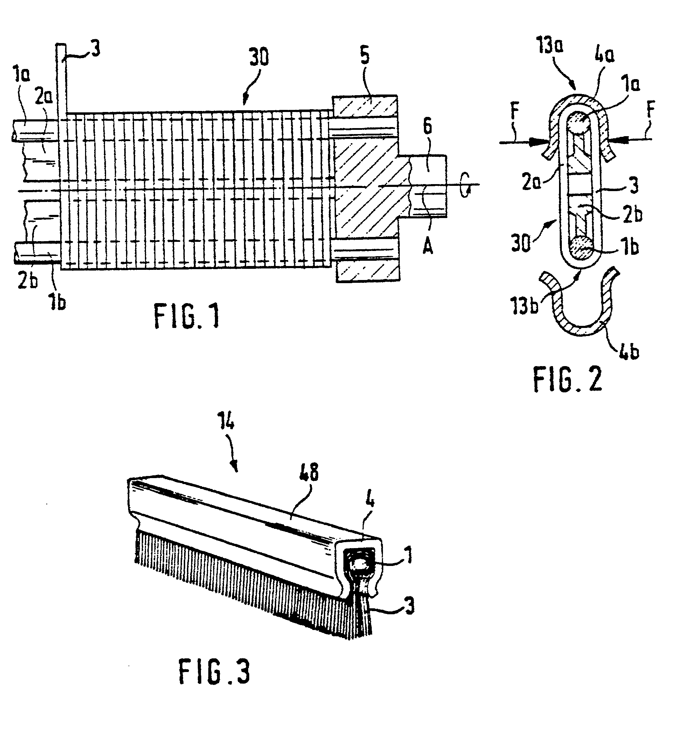

Nach Fig. 1 erfolgt die Wicklung einer dichten Fadenpackung 30 aus einem Endlosfaden 3 in der Weise, daß zwei parallel mit Abstand voneinander angeordnete langgestreckte Dorne 1a, 1b, die an ihren Enden in Einspannköpfen 5 gehalten sind, mittels einer Welle 6 um die Achse A rotieren. Die Dorne 1a, 1b sind im allgemeinen dünne Drähte und müssen deshalb von Stützkörpern 2a, 2b gegen Durchbiegung gesichert sein. Auch der Faden 3 ist in der Zeichnung in erheblichem Maße dicker dargestellt als er in Wirklichkeit ist. Üblicherweise werden Fäden verwendet, deren Durchmesser 20 bis 80 µm beträgt. Im Querschnitt nach Fig. 2 wird das Aufstecken von Klemmleisten 4a, 4b auf die Scheitel 13a, 13b der fertig gewickelten Fadenpackung 30 gezeigt. Die Klemmleisten 4a, 4b üben eine Spannkraft entsprechend den Pfeilen F auf die Fadenpackung aus, wobei sie durch äußere Einflüsse entsprechend den Pfeilen F gepreßt sein können. Dadurch bilden die Klemmleisten, die Fadenpackung und der jeweilige Dorn 1a bzw. 1b einen festen Verbund.

Fig. 3 zeigt einen solchen Verbund nach dem mittigen Durchtrennen der Anordnung nach Fig. 2. Dieser Verbund wird als Bürstenhalbzeug 14 bezeichnet. Solche Bürstenhalbzeuge können nun in die gewünschte Kontur gebogen werden, wobei vorzugsweise Kreisringe aus ihnen gebildet werden. Dabei kann die Biegung so erfolgen, daß die rückwärtige Stirnfläche 48 der Klemmleiste 4 zur inneren Umfangsfläche wird und die Borsten 3 radial nach außen gerichtet sind oder umgekehrt diese rückwärtige Stirnfläche 48 der Klemmleiste 4 zur äußeren Umfangsfläche wird und die Borsten 3 radial nach innen gerichtet sind. Die zuletzt genannte Ausführungsform ist ausschnittweise in Fig. 4 dargestellt, wobei entsprechend den Verfahrensschritten e) und f) nach Patentanspruch 2 eine zweite Borstenfassung 8a, 8b in Form von Ringen auf die freien Enden der Borsten aufgebracht ist. Entsprechend den in Fig. 4 eingetragenen Pfeilen können die Borsten zwischen der zweiten Borstenfassung eingeklemmt und durch geeignete Mittel unlösbar fixiert sein, wobei im Fall von Metallborsten als Fügemittel Schweißen oder Löten in Betracht kommt, bei Keramikborsten Kleben oder Löten. Der Innendurchmesser der Borstenfassung 8a, 8b nach Fig. 4, der als Passungsdurchmesser für die fertige Bürstendichtung dienen soll, kann nach der Verbindung mit den Borstenenden auf Maß bearbeitet werden, wobei gleichzeitig vorstehende Borstenenden mit abgearbeitet werden. Danach wird die Klemmleiste 4 entsprechend der Trennlinie 10 abgetrennt, was vorzugsweise durch Stanzen erfolgt, so daß die freien Enden der Bürstendichtung radial nach außen gerichtet sind.

Soweit eine Schrägstellung der Borsten in ihrer Fassung erzielt werden soll, kann dies dadurch geschehen, daß schräg zur Längsachse A der Vorrichtung eine die Dorne 1a, 1b umkreisende Orbitalwickelanlage angeordnet ist. Zwischen der Orbitalwickelanlage und dem die Dorne 1a, 1b umfassenden Wickelrahmen ist dabei eine Vorschubbewegung auszuführen.

Die in den Fig. 5 und 6 dargestellte Vorrichtung zur Erzeugung einer Schrägstellung der Borsten in ihrer Fassung umfaßt einen Parallelogrammgelenkrahmen mit zwei parallel ausgerichteten Basisholmen 10a, 10b, die über zwei teleskopische Querholme 12 miteinander verbunden sind, wobei die Querholme an den Basisholmen jeweils in Gelenken 17 drehbar angelenkt sind. Die Länge der Querhole 12 wird bei der Versetzung der Basisholme 10a, 10b so verändert, daß die aufgewickelten Borstenfasern gleichmäßig gespannt bleiben. Auf den Basisholmen 10a, 10b sind Anschläge 18 vorgesehen, zwischen denen die Fadenpackung aufgewickelt wird. Fig. 5 zeigt die Wickelstellung, in der die Basisholme 10a, 10b und die Querholme 12 ein Rechteck bilden, während Fig. 6 die parallel versetzte Stellung der Vorrichtung zeigt, in der die schräggestellte Fadenpackung auf den Basisholmen 10a, 10b bzw. darauf angeordneten Dornen 1a, 1b durch Aufstecken von Klemmleisten befestigt werden.

Alternativ zu der in den Fig. 5 und 6 dargestellten Vorrichtung kann die Vorrichtung nach Fig. 7 bzw. 7a zur Erzeilung einer Schrägstellung der Borsten in ihrer Fassung verwendet werden. Die in Fig. 7 schematisch in Seitenansicht dargestellte Vorrichtung zeigt einen Gelenkrahmen mit zwei parallel ausgerichteten Basisholmen 10a, 10b, die an einem Querholm 12 angelenkt sind. An dem dem Querholm 12 gegenüberliegenden Ende ist ein Abschlußflansch 33 zwischen die beiden Basisholme 10a, 10b eingesetzt. An den Basisholmen 10a, 10b sind jeweils zwei Kurvenscheiben 31, 32 mit ihren Sehnenkanten befestigt. Die Kurvenscheiben 31 des Basisholms 10a stützen sich mit ihrer Kurvenfläche gegen die Kurvenscheiben 32 des Basisholms 10 so ab, daß eine parallele Ausrichtung der Basisholme 10a, 10b erfolgt. Die Kurvenkonturen der Kurvenscheiben 31, 32 sind dabei so aufeinander abgestimmt, daß die Länge einer Fadenwindung über den Verschiebeweg konstant bleibt. Die Basisholme 10a, 10b weisen an ihrer radial äußeren Seite eine rinnenförmige Ausnehmung auf, in der jeweils ein Dorn 1a, 1b vorzugsweise in Form eines Drahtes liegt. Über die Dorne 1a, 1b bzw. über die Basisholme 10a, 10b wird der Faden in oben beschriebener Weise gewickelt, wobei die Wickelrichtung in Fig. 7 mit r angegeben ist. Danach werden die Basisholme 10a, 10b parallel gegeneinander versetzt, bis die Fäden der Fadenpackung die Richtung s aufweisen, wobei während des Parallelverschiebens die Kurvenscheiben 31 auf den Kurvenscheiben 32 gleiten und der Querholm 12 seine Länge verändert. Nach dem Parallelversetzen kann durch eine Spannvorrichtung mit dem Spannbacken 11 (vergleiche Fig. 7a) eine erhöhte Pressung auf die vorher aufgesetzten Klemmleisten 4a, 4b aufgebracht werden, um die Fadenpackung im Bereich der Scheitel endgültig und unlösbar in der Klemmleiste zu fixieren.

Nach dem Durchschneiden der so hergestellten Fadenpackung entstehen Bürstenhalbzeuge 14, wie sie in Fig. 8 gezeigt sind. In Fig. 9 ist zur Festlegung der Borsten 3 auf dem Dorn 1 aushärtbares Material bzw. Lötpaste 15 verwendet, wobei zusätzlich zwischen dem Borstenmaterial noch einige Lagen Kleber bzw. Lötfolie zur Fixierung der Borsten verwendet sind.

Das in Fig. 10 im Querschnitt dargestellte Bürstenhalbzeug 14 weist eine im Profil hutförmige Klemmleiste auf, deren Hutränder mit 20 bezeichnet sind. Die Biegung eines solchen Bürstenhalbzeuges mittels einer Rollbiegevorrichtung wird in den Fig. 11 und 12 gezeigt. Die Biegevorrichtung nach Fig. 11 besteht aus zwei Stützrollen 21, Druckrollen 22 und mit diesen durch einen gemeinsamen Rahmen 24 verbundenen Preßrollen 23. Die Druckrollen 22 und/oder Preßrollen 23 werden durch ein Walzdrehmoment M angetrieben. Die Preßrollen 23 können gegen die Druckrollen 22 mit der Kraft $P_2$ gepreßt werden. Sie können gleichzeitig mit der horizontalen Kraft Q gegeneinander gepreßt werden. Das Bürstendichtungshalbzeug 14 wird mit seinen Huträndern 20 zwischen die Rollenpaare 22 und 23 eingeführt und durch den Walzspalt gezogen. Wird nun die Kraft $P_1$ auf den Druckrollenrahmen 24 aufgegeben, so wird das Bürstendichtungshalbzeug 14 gegen die Stützrollen 21 gedrückt und mit jedem Walzenstich mehr gebogen, da die Vertikalkräfte $P_1$ nur über die durch die Preßrollen 23 vertikal und horizontal gestützten Flansche des Bürstendichtungsprofils abgeführt werden können. Die Preßrollen 23 verhindern dabei eine Faltenbildung der hutförmigen Klemmleiste. Der Querschnitt nach Fig. 12 verdeutlicht die Biegevorrichtung.

**Patentansprüche**

1. Verfahren zur Herstellung einer Bürstendichtung, deren Borsten in einer vorzugsweise als Haltering (8a, 8b) ausgebildeten Fassung befestigt sind durch Wickeln eines aus Borstenmaterial bestehenden Fadens (3) über einen Kern (1a, 1b), Aufbringen einer die gewickelte Fadenpackung (30) teilweise einschließenden Fassung (4) und Durchtrennen der Fadenpackung, so daß freie Borsten entstehen, gekennzeichnet durch folgende Verfahrensschritte:
   a) Wickeln des aus Borstenmaterial bestehenden Fadens (3) über zwei parallel mit Abstand voneinander angeordnete langgestreckte Dorne (1a und 1b) zu einer dichten, etwa ovalen Querschnitt aufweisenden Fadenpackung (30).
   b) Fassen der Fadenpackung (30) auf den beiden Dornen (1a, 1b) durch Aufstecken von Klemmleisten (4a und 4b) an den Scheiteln (13a und 13b).
   c) Durchtrennen der Fadenpackung (30) in einem Schnitt parallel zu den Dornen (1a, 1b), so daß zwei sich gegenüberliegende vorsugsweise mit gleichlangen Borsten ausgestattete gerade Bürstenhalbzeuge (14) entstehen.
   d) Biegen der geraden Bürstenhalbzeuge (14) in die gewünschte Bürstenkontur, insbesondere in Kreisbogenform und Fügen zu einem geschlossenen Ring.

2. Verfahren zur Herstellung einer Bürstendichtung nach Anspruch 1, dadurch gekennzeichnet, daß sich an den Verfahrensschritt d) noch folgende Verfahrensschritte anschließen:
   e) Aufbringen und Fügen einer Borstenfassung (8a, 8b) auf die freien Enden der Borsten (Fig. 4).
   f) Abtrennen der mit der Klemmleiste (4) verbundenen Borstenenden (Trennlinie (10).

3. Verfahren zur Herstellung einer Bürstendichtung nach Anspruch 1 oder Anspruch 2, dadurch gekennzeichnet, daß zur Erzielung einer Schrägstellung der Borsten in ihrer Fassung der Faden (3) in einer Wickelebene gewickelt wird, welche senkrecht zu der durch die Dorne (1a, 1b) aufgespannten Ebene und um einen Steigungswinkel $\wp$ geneigt zur Längsrichtung der Dorne (1a, 1b) liegt.

4. Verfahren zur Herstellung einer Bürstendichtung nach Anspruch 1 oder Anspruch 2, dadurch gekennzeichnet, daß zur Erzielung einer Schrägstellung der Borsten in ihrer Fassung vor dem Verfahrensschritt b) die mit der Fadenpackung bewickelten Dorne (1a, 1b) in Längsrichtung gegeneinander versetzt werden (Fi.g 6).

5. Verfahren nach den Ansprüchen 1 bis 4, dadurch gekennzeichnet, daß je nach Verwendung von Borstenmaterial aus Nichtmetall oder Metall lagenweise Kleber- bzw. Lötfolie im Bereich der Scheitel (13a, 13b) der Fadenpackung beigewickelt wird.

6. Verfahren nach den Ansprüchen 1 bis 5, dadurch gekennzeichnet, daß anstelle eines Einzelfadens (3) ein Fadenstrang oder ein bandförmiges Unidirektionalgewebe mit leicht entfernbarer Schußbindung gewickelt wird.

7. Verfahren nach den Ansprüchen 1 bis 6, dadurch gekennzeichnet, daß bei Verwendung von metallischem Borstenmaterial vor dem Durchtrennen der Faden- bzw. Drahtpackung eine Wärmebehandlung stattfindet.

8. Verfahren nach den Ansprüchen 1 bis 7, dadurch gekennzeichnet, daß die Klemmleisten (4, 4a, 4b) im Profil U- oder Hutform aufweisen.

9. Verfahren nach den Ansprüchen 1 bis 7, dadurch gekennzeichnet, daß die Klemmleiste eine im Profil kreisförmige Manschette ist.

10. Verfahren nach den Patentansprüchen 1 bis 9, dadurch gekennzeichnet, daß zur Festlegung der Fadenpackung (30) auf den beiden Dornen (1a, 1b) anstelle von Klemmleisten gieß- oder streichbares Aushärtematerial (15) verwendet wird (Fig. 9).

11. Verfahren nach den Ansprüchen 2 bis 10, dadurch gekennzeichnet, daß nach dem Verfahrensschritt e) (Anspruch 2) eine Fertigbearbeitung der rückwärtigen Stirnfläche, insbesondere Umfangsfläche, der Borstenfassung (8a, 8b) erfolgt.

12. Vorrichtung zur Durchführung des Verfahrens nach Patentanspruch 4 mit einem Wickelrahmen, dadurch gekennzeichnet, daß der Wickelrahmen als parallelogrammgelenkrahmen (Gelenke 17) ausgebildet ist über dessen parallel gegeneinander verschiebbare Basisholme (10a, 10b) der Faden (3) wickelbar ist und dessen Querholme (12) in ihrer Länge während der Parallelverschiebung der Basisholme (10a, 10b) veränderbar sind.

13. Vorrichtung zur Durchführung des Verfahrens nach Patentanspruch 4 mit einem Wickelrahmen, dadurch gekennzeichnet, daß der Wickelrahmen zwei parallel ausgerichtete Basisholme (10a, 10b) umfaßt, an denen Kurvenscheiben (31, 32) mit ihren Sehnenkanten so befestigt sind, daß die Basisholme (10a, 10b) unter gegenseitigem Gleiten der Kurvenflächen der Kurvenscheiben (31, 32) aufeinander in Längsrichtung verschiebbar sind, wobei die Kurvenkontur so gewählt ist, daß die Länge einer Fadenwindung über dem Verschiebeweg konstant bleibt.

14. Vorrichtung nach Anspruch 12 oder 13, dadurch gekennzeichnet, daß die Basisholme (10a, 10b) auf ihrer radial äußeren Seite eine rinnenförmige Ausnehmung zur Aufnahme der vorzugsweise als Draht vorliegenden Dorne (1a, 1b) aufweisen (Fig. 7a).

**Claims**

1. Process for the production of a brush seal whose bristles are secured in a holder constructed preferably as a holding ring (8a, 8b) by winding a thread (3) of bristle material over a core (1a, 1b), applying a holder (4) partially enclosing the wound thread package (30) and cutting through the thread package so that there are free bristle ends, characterised by the following process steps:
   a) winding the thread (3) of bristle material over two oblong spindles (1a and 1b), arranged in parallel and spaced apart from each other, to form a dense thread package (30) of approximately oval cross section,
   b) holding the thread package (30) on the two spindles (1a, 1b) by placing clamping strips (4a and 4b) on the tops (13a and 13b),
   c) cutting through the thread package (30) in a section parallel to the spindles (1a, 1b) so that there are two opposite straight semi-finished brush products (14) preferably equipped with equal length bristles,
   d) bending the straight semi-finished brush products (14) into the desired brush shape, especially into arcuate shape and assembling them to form a closed ring.

2. Process for the production of a brush seal according to claim 1, characterised in that further process steps follow process step d):
   e) applying and assembling a bristle holder (8a, 8b) on the free ends of the bristles (Fig. 4).
   f) separating the bristle ends (parting line (10)) bound by the clamping strip (4).

3. Process for the production of a brush seal according to claim 1 or claim 2, characterised in that to obtain an inclination of the bristles in their holder the thread (3) is wound in a winding plane which is perpendicular to the plane determined by the spindles (1a, 1b) and inclined at an angle of inclination to the longitudinal direction of the spindles (1a, 1b).

4. Process for the production of a brush seal according to claim 1 or claim 2, characterised in that to obtain an inclination of the bristles in their holder before process step b) the spindles (1a, 1b) wound with the thread package are offset with respect to each other in the longitudinal direction (Fig. 6).

5. Process according to claims 1 to 4, characterised in that adhesive foil or soldering foil is wound in layers in the area of the tops (13a, 13b) of the thread package depending in each case on whether the bristle material used is non-metallic or metallic.

6. Process according to claims 1 to 5, characterised in that instead of an individual thread (3) a row of threads or a band-shaped unidirectional fabric is wound with an easily removable weft bond.

7. Process according to claims 1 to 6, characterised in that when using metallic bristle material there is heat treatment before the thread- or wire package is cut through.

8. Process according to claims 1 to 7, characterised in that the clamping strips (4, 4a, 4b) have a U-shaped or cap-shaped profile.

9. Process according to claims 1 to 7, characterised in that the clamping strip is a collar of circular profile.

10. Process according to claims 1 to 9, characterised in that instead of clamping strips castable or brushable hardening material (15) is used to fix the thread package (30) on the two spindles (1a, 1b) (Fig. 9).

11. Process according to claims 2 to 10, characterised in that after process step e) (claim 2) the rearward surface, especially the peripheral surface, of the bristle holder (8a, 8b) is given a finishing operation.

12. Device for carrying out the process according to claim 4 having a winding frame, characterised in that the winding frame is constructed as a jointed parallelogram frame (joint 17) over whose parallel base spars (10a, 10b), movable relatively to each other, the thread (3) can be wound, and whose transverse spars (12) can be varied in length during the parallel movement of the base spars (10a, 10b).

13. Device for carrying out the process according to claim 4 having a winding frame, characterised in that the winding frame has two parallel base spars (10a, 10b) on which cam discs (31, 32) are secured with their chord edges so that the base spars (10a, 10b) can be moved in the longitudinal direction, with the mutual sliding of the cam surfaces of the cam discs (31, 32), against each other, the cam shape being selected so that the length of one thread turn remains constant over the movement path.

14. Device according to claim 12 or 13, characterised in that on their radially outer side the base spars (10a, 10b) have a groove-shaped recess for receiving the spindles (1a, 1b), preferably present as wire (Fig. 7a).

**Revendications**

1. Procédé de fabrication d'un joint-brosse dont les poils sont fixés dans une garniture de préférence en forme d'anneau de fixation (8a, 8b), par bobinage d'un fil (3) réalisé dans le matériau des poils, sur un noyau (1a, 1b), par l'application d'une garniture (4) qui entoure partiellement le paquet de fils bobinés (30) et par coupure du paquet de fils pour obtenir les extrémités libres des poils, procédé caractérisé en ce que:
   a) on bobine le fil (3) réalisé dans le matériau des poils, sur deux broches allongées (1a, 1b), parallèles et distantes pour former un paquet de fils (30) dense, à section sensiblement ovale,
   b) on saisit le paquet de fils (30) sur les broches (1a, 1b) par la mise en place de longerons de serrage (4a, 4b) sur les sommets (13a, 13b),
   c) on coupe le paquet de fils (30) suivant une coupe parallèle aux broches (1a, 1b) pour obtenir dans l'intervalle deux joints-brosses (14) en forme de produits semi-finis avec des poils de même longueur, d) on cintre le joint-brosse (14) à l'état de produit semi-fini pour lui donner la forme de brosse souhaitée, notamment une forme d'arc de cercle et on réunit pour former un anneau fermé.

2. Procédé de fabrication d'un joint-brosse selon la revendication 1, caractérisé en ce que l'étape de procédé d est suivie par les étapes de procédé suivantes:

e) on met en place et on réunit les extrémités d'une garniture de brosse (8a, 8b) sur les extrémités libres des poils (figure 4).

f) on sépare les extrémités de poils (ligne de coupe 10) reliés aux longerons de serrage (4).

3. Procédé de fabrication d'un joint-brosse selon la revendication 1 ou la revendication 2, caractérisé en ce que pour incliner les poils dans leur garniture on bobine le fil (3) dans un plan de bobinage qui est incliné par rapport au plan passant les broches (1a, 1b) d'un angle $\gamma$ par rapport à la direction longitudinale des broches (1a, 1b).

4. Procédé de fabrication d'un joint-brosse selon la revendication 1 ou la revendication 2, caractérisé en ce que pour incliner les poils dans leur garniture on décale dans la direction longitudinale respective les broches (1a, 1b) sur lesquelles est bobiné le paquet de fils (figure 6) avant de passer à l'étape de procédé b.

5. Procédé selon les revendications 1 à 4, caractérisé en ce que suivant que la matière des poiles est un métal ou n'est pas un métal, on bobine le paquet de fils avec interposition de couches de colle ou de feuilles de brasure au niveau du sommet (13a, 13b).

6. Procédé selon les revendications 1 à 5, caractérisé en ce qu'à la place d'un fil unique (3) on utilise un faisceau de fils ou un tissu unidirectionnel en forme de bande avec des liaisons de trame facilement amovibles.

7. Procédé selon les revendications 1 à 6, caractérisé en ce que si l'on utilise un métal pour les poils, on effectue un traitement thermique avant de couper les fils ou le paquet de fils.

8. Procédé selon les revendications 1 à 7, caractérisé en ce que les longerons de serrage (4, 4a, 4b) ont une section en forme de U ou une section en forme de chapeau.

9. Procédé selon les revendications 1 à 7, caractérisé en ce que le longeron de serrage est un manchon à section circulaire.

10. Procédé selon les revendications 1 à 9, caractérisé en ce que pour bloquer le paquet de fils (30) sur les deux broches (1a, 1b) on utilise une matière durcissable (15) appliquée par coulée ou au pinceau à la place des longerons de serrage (figure 9).

11. Procédé selon les revendications 2 à 10, caractérisé en ce qu'après l'étape de procédé e (revendication 2) on effectue un travail de finition sur la surface frontale arrière, notamment la surface périphérique de la garniture des poils (8a, 8b).

12. Dispositif pour la mise en œuvre du procédé selon la revendication 4 à l'aide d'un châssis de bobinage, caractérisé en ce que le châssis de bobinage est en forme de parallélogramme articulé (articulations 17) et le fil (3) s'enroule sur les grands côtés (10a, 10b) déplaçables parallèlement l'un par rapport à l'autre et dont les petits côtés (12) ont une longueur variable pendant le déplacement en parallèle des grands côtés (10a, 10b).

13. Dispositif pour la mise en œuvre du procédé selon la revendication 4 à l'aide d'un châssis de bobinage, caractérisé en ce que le châssis de bobinage se compose de deux grands côtés parallèles (10a, 10b) auxquels sont fixés des disques de cames (31, 32) par l'arête correspondant à leur corde, les grands côtés (10a, 10b) étant coulissants dans la direction longitudinale par glissement des surfaces de cames des disques de cames (31, 32) et le contour de la courbe est choisi pour que la longueur d'une spire de fil reste constante pendant la course de déplacement.

14. Dispositif selon la revendication 12 ou la revendication 13, caractérisé en ce que les grands côtés (10a, 410b) présentent sur leur côté radialement tourné vers l'extérieur, une goulotte pour recevoir les broches (1a, 1b) de préférence en forme de fils (figure 7a).

FIG. 1

FIG. 2

FIG. 3

FIG.4

FIG.5

FIG.6

FIG.8

FIG.9

## FIG. 7

## FIG. 7a

FIG.10

FIG.11

FIG.12

EP 0 211 275 B1